# EUROPEAN PATENT APPLICATION

(11) **EP 3 182 247 A1**
(43) Date of publication of application: **21.06.2017**
(21) Application number: 16202381.6
(22) Date of filing: 06.12.2016
(51) Int. Cl.: G06F 1/26, H02J 3/14

(54) **SYSTEMS AND METHODS FOR DYNAMIC UPS OPTIMIZATION**

(30) Priority: 16.12.2015 US 201514971244
(71) Applicant: Schneider Electric IT Corporation, West Kingston, RI 02892 (US)
(72) Inventor: Linder, Stephen Paul, Medford, MA 02155 (US); Orner, Bret Alan, Arlington, MA 02476 (US)
(74) Representative: Zerbi, Guido Maria

(57) **Abstract**

Systems and methods are provided for Dynamic Optimization of Uninterruptable Power Supplies (UPS) and ancillary connected devices based on External Variable Data (EVD). EVD combined with UPS data, and other infrastructure data from the external network are received and optimizations are determined and stored in memory. An operating profile is generated to optimize the connected devices for the predetermined criterion, which may include efficiency, security and reliability. Operating modes of the connected devices are then changed by updating the operating profiles through the devices' communications interface.

## Description

### BACKGROUND

### Field of Invention

Embodiments of the present disclosure relate generally to systems and methods for analysis of conditions that may affect an infrastructure and more specifically for dynamic modification of Uninterruptable Power Supply (UPS) infrastructure to optimize on such conditions.

### Discussion of Related Art

Stand alone computer equipment as well as centralized data centers to house physical computing systems have existed for many years, as have the infrastructure to support them. While early in their history, little or no protection was offered for these computing systems, supporting infrastructure has evolved substantially to protect the computer equipment which operates the mission critical resources of today. However, even with this evolved infrastructure protection, the very same conditions which may have occurred in the past, still exist and lend themselves to potential optimization.

Such conditions may include interruption of electrical power, cooling ability, or security breaches caused by any number of naturally occurring or manmade events. Traditional solutions to these conditions generally may include a reserve or redundant resource, such as reserve or redundant electrical power, cooling capacity, or human intervention to remedy a security breach. These resources are reactively utilized after the given infrastructure component fails and are intended to compensate for the portion of the infrastructure that has been compromised.

It is advantageous today, as infrastructures are gaining complexity, to increase the ability to adapt to a particular environment or set of optimizations to maximize particular characteristics such as security or efficiency. Advanced risk mitigation is another available advantage with the ability of large amounts of data. With these "Big Data" sources, coupled with the available data to analyze from the infrastructure itself, an optimization of UPS and other infrastructure is now possible.

### SUMMARY

Aspects of the present invention relate generally to systems and methods of Dynamic Uninterruptable Power Supply (UPS) Optimization Based on External Data. Embodiments of a system of Dynamic UPS Optimization Based on External Data comprise, a communications interface configured to communicate with an external network, a memory capable of storing External Variable Data (EVD) and Uninterruptable Power Supply (UPS) Data, and a processor in communication with both the communications interface and the memory. Embodiments of the system allow the processor to be configured to receive the EVD and the UPS Data from the external network, determine a condition affecting a UPS device using the EVD and the UPS Data received through the communications interface or stored in memory. The processor for the system then generates a profile to optimize the UPS device for the condition determined, or stored in the memory, and change an operating mode of the affected UPS device based on the condition determined and the profile generated through the communications interface.

Principles of the invention demonstrate the system of Dynamic UPS Optimization Based on External Data where a plurality of UPS devices is optimized. Alternate embodiments provide the UPS device changes operation to an efficiency mode in response to the determined condition. Further, the operating mode of the UPS device may change from a double conversion, to a single conversion, or a bypass mode in response to the determined condition.

Principles of the invention demonstrate the system of Dynamic UPS Optimization Based on External Data where the processor is further configured that a plurality of geographic profiles are created based on the EVD, the UPS Data, or any combination thereof. Alternate embodiments provide a user configures one or more data sources, condition thresholds, device parameters, operating characteristics, UPS devices, or any combination thereof.

Embodiments of a method of Dynamic Uninterruptable Power Supply (UPS) Optimization Based on External Data comprises, receiving External Variable Data (EVD) and an UPS Data from an external network. Determining a condition to a UPS device from the EVD and UPS Data received through a communications interface and stored in a memory. Generating a profile to optimize the UPS device for the condition determined. Changing an operating mode of the UPS based on the condition determined and the profile generated through the communications interface. This method is conducted at a processor in communication with the communications interface and the memory.

Principles of the invention demonstrate the method of Dynamic UPS Optimization Based on External Data where generating the profile to optimize includes a plurality of UPS devices. Alternate embodiments provide determining the condition of the UPS device the operating mode is changed to an efficiency mode. Further, determining the condition of the UPS device changes the operating mode from a double conversion to a single conversion, or a bypass mode.

Principles of the invention demonstrate the method of Dynamic UPS Optimization Based on External Data where determining the condition to the UPS device from the EVD and the UPS Data received creates a plurality of geographic profiles. Alternate embodiments provide a user configures one or more data sources, condition thresholds, network device parameters, operating characteristics, UPS devices, or any combination thereof.

Embodiments of a system of Dynamic UPS Optimization Based on External Data comprise, an External Variable Data (EVD) and a Uninterruptable Power Supply (UPS) Data configured to transmit through an external network, a processing device configured to receive and process the EVD data and the UPS Data, and a UPS device configured to receive the processed EVD and UPS Data to change an operating mode of a UPS device.

### BRIEF DESCRIPTION OF THE DRAWINGS

The accompanying drawings are not intended to be drawn to scale. In the drawings, each identical or nearly identical component that is illustrated in various figures is represented by a line numeral. For purposes of clarity, not every component may be labeled in every drawing. In the drawings:
FIG. 1 is a diagram of a system for Dynamic UPS Optimization in accordance with embodiments of the invention;
FIG. 2 is a diagram of alternate embodiments of a system for Dynamic UPS Optimization in accordance with embodiments of the invention;
FIG. 3 is a flow diagram of a process for Dynamic UPS Optimization in accordance with various embodiments of the invention;
FIG. 4 is a diagram of a system for Dynamic UPS Optimization in context in accordance with embodiments of the invention;
FIG. 5 is a functional block diagram of a general purpose computer system that may be used in embodiments of the invention;
FIG. 6 is a functional block diagram of a storage system that may be used with the general purpose computer system of FIG. 5.

### DETAILED SUMMARY

This invention is not limited in its application to the details of construction and the arrangement of components set forth in the following descriptions or illustrated by the drawings. The invention is capable of other embodiments and of being practiced or of being carried out in various ways. Also, the phraseology and terminology used herein is for the purpose of descriptions and should not be regarded as limiting. The use of "including," "comprising," "having," "containing," "involving," and variations herein, are meant to be open-ended, i.e. "including but not limited to."

In the emerging world of the Internet of Things (IoT) or more generally, Cyber Physical Systems (CPS), a convergence of multiple technologies is underway to allow the capture of information from a large array of physical end points or "things." These end points may be sensed or controlled remotely using existing network infrastructure and allow for efficient machine to machine and human to machine communication. As the network of "things" expands, an increasingly large amount of data will be generated and allow for correlations which have not been possible before. This data may be gathered in central locations and sorted by type. As the amount of data grows through the ever expanding IoT, the available actionable information will grow as well. This large repository of data may be subsequently mined for knowledge and trends in various amounts of granularity, from the very local to global. This knowledge may be used by any number of devices for any variety of reasons. Large data repositories of this type may be called "Big Data" and in the current context may be used to assist in both detection and prediction of conditions to computing systems.

While the number and type of "things" are expanding, so too are the network of devices that possess intelligence regarding their ability to not only sense their environment but also have the ability to make changes to it. Such infrastructure may be more than a sensor to collect data, but may be adjusted, autonomously, or otherwise, to vary its operational mode for any number of reasons, which may include protection from a threat or to operate more efficiently, etc. These intelligent devices may be included as part of various portions of an infrastructure to allow data collection, monitoring, or control of particular devices. Such devices may be used to modify the infrastructure itself and allow various configurations based on operational optimizations such as security or efficiency.

As advanced as the computer system equipment and the supporting infrastructure currently is and will become, such computer systems remain susceptible from the very same conditions of the past. Severe weather or complex man made threats such as cyber vulnerabilities are every day examples of such conditions. The Department Of Energy (DOE) has estimated severe weather is the single leading cause for power outages in the United States. Such severe weather may be at least partially responsible for up to 58% of outages observed since 2002 and up to 87% of outages affecting 50,000 or more people. The Energy Information Administration (EIA) has reported a substantial rise of weather related outages since 1992. Substantial opportunity exists to reduce or remove risk to computer systems supported by such connected infrastructure by reactively and predicatively monitoring data repositories along with connected infrastructure. Autonomously or with user guidance, determining optimizations and if a risk is detected or predicted, configure the infrastructure to mitigate or remove it completely. Principles of the invention allow for various other conditions beyond risk, such as an ability to optimize the environment for energy efficient, security, or any other user defined characteristic. These conditions may then be acted upon in a reactive or predictive manner.

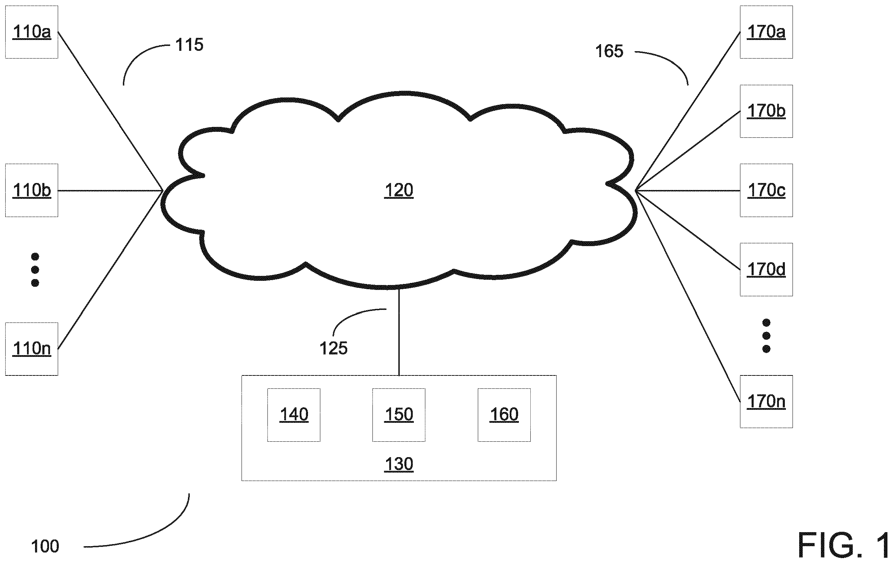

It should be appreciated that the amount of variability in systems designed to capture and process information is enormous. FIG. 1 represents many exemplary systems with components to embody a system for Dynamic Uninterruptable Power Supply (UPS) Optimization Based on External Data **100.** There are many types of data sources that may be used as an input to the system for condition analysis to a computer infrastructure. Many of these data sources may not themselves relate to a particular infrastructure, type of infrastructure, or infrastructure at all, but when analyzed in conjunction with other data sources may yield conditions to a particular infrastructure that are actionable for optimization. These data sources may be referred to as *External Variable Data* (EVD) **110a-110n.** Such sources may include, but are not limited to data sources such as electrical grid status, electric rate, electric availability, downed power line status, climate, weather, forest fire, census, GIS, health, healthcare, financial, financial market, cyber alert, aviation, social media, activity generated data, cloud computing applications, data warehousing, document archive, governmental, structured data, unstructured data, or any combination of these data sources. Such sources need not be considered "Big Data" to be used as local and micro data sources are also viable for use. Data simply need be available and ultimately relatable to infrastructure to be used. Principles of the invention allow for one or more sources of EVD data to be used.

A second data type represented in FIG. **1** is data from the connected infrastructure devices themselves **170a-170n.** This device data may be provided by any source capable of providing data. Principles of the invention allow data to be provided by a connected Uninterruptable Power Supply (UPS), or devices which may be electrically connected to or served by a UPS such as Power Meters, Air Conditioners, Power Distribution Units (PDU), Environmental Monitors, Generators, Automatic Transfer Switches (ATS), Software Agents, or any combination thereof to provide status on the state of the monitored infrastructure. Embodiments of the invention allow one or a plurality of any such devices, in any combination, to be used in any number. Various embodiments allow for this data to be provided by any number of devices beyond the "things" detailed above in a IoT context. These devices may be fully autonomous or require additional programming or user interaction for operation. Principles of the invention allow this data to be capable of receiving or processing a wide variety of conditions that may include but are not limited to, temperature, humidity, ambient light, sound, smoke, carbon monoxide, motion, non-conductive fluid, conductive fluid, power, current, vibration, switch position, voltage, or any combination thereof. In this way both external (EVD) **110a-110n** and internally sources **170a - 170n** of data to an infrastructure may be utilized to determine a condition to optimize UPS operation.

Other data types are possible based on the device managed and in any number or combination. Connection types, data types, or data rates of received information need not be synchronized or similar in nature as each sensor may act independently or in relation to other sensors. In one of many embodiments, a temperature sensor may provide data updates once per second, where a smoke detector need not provide a change in data input until an occurrence of smoke in a facility.

These infrastructure devices **170a - 170n** need not be geographically localized or logically grouped in any way to utilize embodiments of the invention. Grouping devices geographically or logically may allow more economic use of the devices. A geographic grouping such as in a room, home, school, data center, or office building may be accomplished, as well as logically locating devices by function. One of many logical grouping examples may be locating conductive fluid detection sensors proximate to a source of building chill water such as an air conditioner condenser or building chill water plant to allow rapid detection of an unanticipated chill water event. It should be appreciated that the groupings of devices may also be located on a very large geographic scale, even globally, where such global operations may be monitored through a device network located in any number of facilities around the globe. Any scale is possible from the very local (a single room or enclosure) to global where a large number of rooms or enclosures are monitored globally.

Each EVD **110a-110n** is connected to a network **120** through a network connection **115.** Similarly, each connected infrastructure device is connected to a network **120** through a network connection **165.** These connections allows access to a cloud computing environment **120** and may also be gained by a variety of devices capable of connecting to such an environment in either a wired or wireless connection manner. These wired connection types may include, but are not limited to, any physical cabling method such as category 5 cable, coaxial, fiber, copper, twistedpair, or any other physical media to propagate electrical signals. Wireless connections may include, but are not limited to personal area networks (PAN), local area networks (LAN), Wi-Fi, Bluetooth, cellular, global, or space based communication networks.

Access between the cloud environment **120** and any other cloud environment is possible where these other cloud environments are configured to connect with devices similar to cloud environments such as the existing cloud **120.** It is well understood that the computing devices, data sources, and connection types **110a -110n, 115, 120, 165, 170a-170n** shown in FIG. **1** are intended to be illustrative only and that computing nodes, data sources, and cloud computing environments may communicate with any type of computerized device over any type of network with addressable or direct connections.

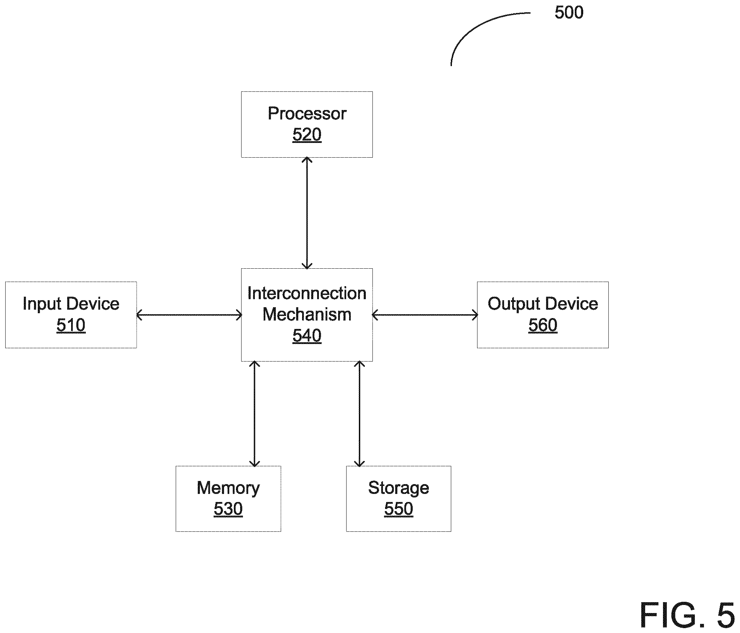

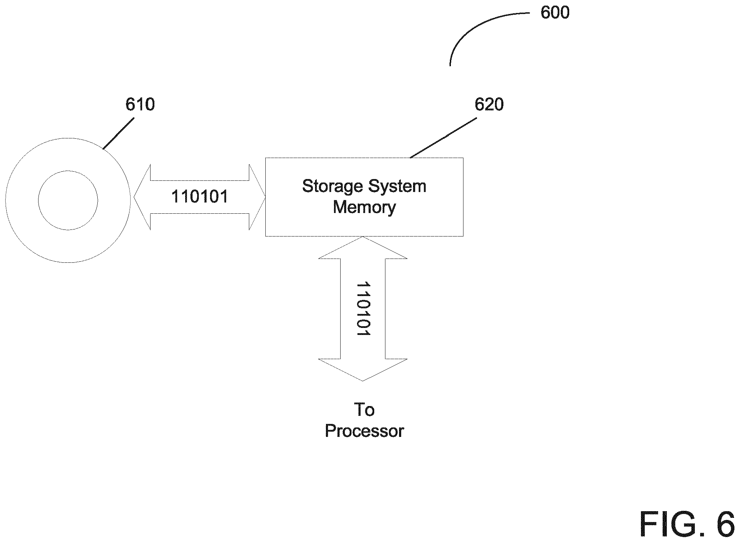

A system for Dynamic Uninterruptable Power Supply (UPS) Optimization Based on External Data may also contain a processing unit **130** which may consist of a processor **140**, communications interface **150**, and memory **160.** Network traffic travels from the cloud **120** to the environmental event task manager **100** through a network connection **125.** This processing unit **130**, may be part of a cloud environment, may be a standalone general purpose computer as detailed in FIG. **5** and FIG. **6**, or combination thereof. In one of many possible embodiments a communications interface **150** and processor **140** may exist in the same physical enclosure, or no enclosure at all, but the memory **160** may exist in a separate location away from other components. There are many variations of such a processing unit **130** and these are known in the state of the art.

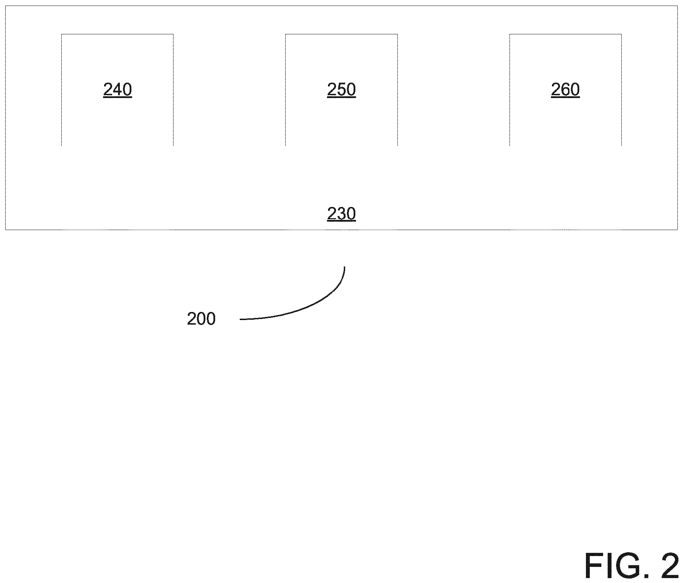

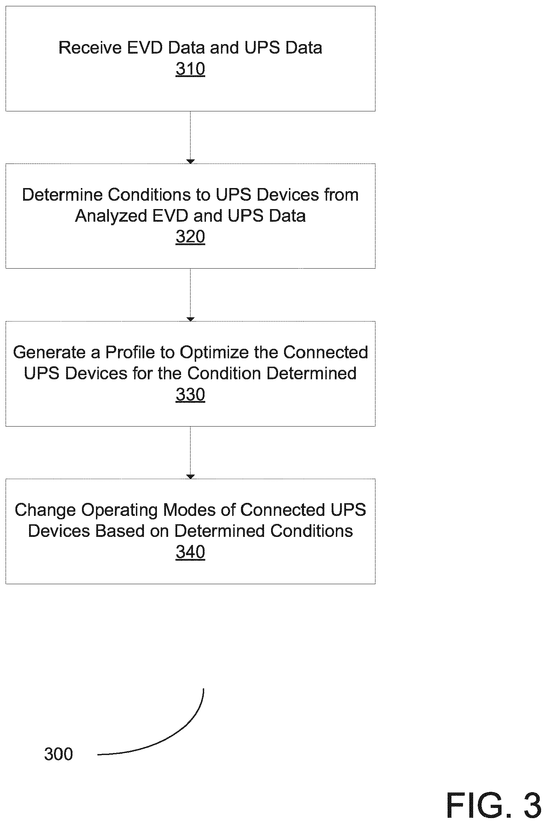

Turning now to FIG. **2****,** a detailed view of various embodiments of a processing system including a processing unit **230** are displayed. The processing unit 230 may be used in place of the processing unit 130 shown in FIG. 1. A system for Dynamic Uninterruptable Power Supply (UPS) Optimization Based on External Data may contain a processing unit **230** which may consist of a processor **240**, communications interface **250**, and memory **260.** Network traffic travels from any networked data source, to the Infrastructure Event Manager through a network connection, such as network connection **125** and connected to the communications interface **250.** This processing unit **230**, may be a part of a cloud environment **120**, may be a standalone general purpose computer as detailed in FIG. **5** and FIG. **6**, or any combination thereof. In one of many possible embodiments a communications interface **250** and processor **240** may exist in the same physical enclosure, or no enclosure at all, but the memory **260** may exist in a separate location away from other components. Multiples of each component may exist to assist in collection of data, processing ability, or storage capacity. All components may exist in separate locations, or the same physical enclosure, or no enclosure at all. Many variations of such a processing unit **230** and are known in the state of the art and may generically be referred to as a "server" as well as a general computing device as detailed in FIG. **5** and FIG. **6****.** In various embodiments the processing system **200** may be seen as the device at the center of the system which coordinates the processing and data collection for the system. Various embodiments of the processing system **200** perform the computational operations necessary to perform the various embodiments of the methods for Infrastructure Optimization **300** shown in FIG. **3****.**

Data may be received from a wide variety of sources and for principles of the invention, are generally classified into two main categories, EVD data provided by one or more sources **110a-110n** and device data provided by the connected infrastructure devices **170a-170n**. One such source of data is specifically UPS device data. This data is received into the method for Infrastructure Optimization **310** via the respective network where the data sources reside **115**, **165** and are received into the processing unit **130**, **240** via its connected network **125.**

Sources of EVD data **110a-110n** are increasing with the wide availability of data and the increasingly cost effective nature of warehousing large amounts of data. Principles of the invention allow for one or more sources of EVD data **110a-110n** to be used. Such sources may include, but are not limited to data sources such as electrical grid status, electric rate, electric availability, downed power line status, climate, weather, forest fire, census, GIS, health, healthcare, financial, financial market, cyber alert, aviation, social media, activity generated data, cloud computing applications, data warehousing, document archive, governmental, structured, unstructured, or any combination of these data sources. Such sources need not be considered "Big Data" to be used as local and micro data sources are also viable for use. Data simply need be available and ultimately relatable to infrastructure to be used.

Specific examples of EVD data **110a-110n** may include data from the National Oceanic and Atmospheric Administration (NOAA) which may provide both climate and weather data which may present direct threats or other conditions to an infrastructure. National Aeronautics and Space Administration (NASA) data may also be used to determine imminent optimizations to infrastructure from extra-terrestrial sources such as solar radiation or other cosmic sources which they collect and make available. While these EVD data sources **110a-110n** may provide a direct correlation to a threat or other condition to be optimized to connected infrastructure, not all EVD sources **110a-110n** need directly do so to be useful in determining risks or other conditions which may serve as a basis for optimization. Further examples may include a combination of financial and cyber alert data where conditions of various financial institutions infrastructure and may be acted on to prevent any potential issue or particular conditions from occurring. This EVD data **110a-110n** need not be naturally occurring, but may also occur from man-made sources, such as traffic patterns, traffic accidents, excessive power usage which may result in "brownouts" or "blackouts," or other intentional man-made disturbance.

Other exemplary embodiments may include the use of electrical rate or demand response data to both determine risks to a connected infrastructure or to allow an optimized configuration of infrastructure. Principles of the invention allow one or more sources of EVD data which may be raw or pre-analyzed data to be provided to the processing unit **130, 230.** It should be appreciated types and numbers of such EVD data sources are enormous as are potential combinations and analysis to produce actionable information to the Dynamic Uninterruptable Power Supply (UPS) Optimization Based on External Data system.

Connected infrastructure data **170a - 170n** may include any device that produces data which may be a part of the infrastructure supporting the computer equipment desired to be protected from risk or any other condition to be optimized. Various embodiments allow for the connected infrastructure data to be provided by one of an Uninterruptable Power Supply (UPS), or devices which may be electrically connected to or served by a UPS such as, Power Meter, Air Conditioner, Power Distribution Unit (PDU), Environmental Monitor, Generator, Software Agent, or any combination thereof. Such "end points" need not have an ability to process data themselves, only to provide data regarding the connected infrastructure. Other embodiments may include environmental data obtained from environmental sensors. These sensors may be capable of receiving a wide variety of environmental conditions that may include but are not limited to, temperature, humidity, ambient light, sound, smoke, carbon monoxide, motion, non-conductive fluid, conductive fluid, power, vibration, or any combination thereof. Other sensor types are possible in any number or combination. Environmental sensor data may be from one or more sensors in a single physical enclosure or distributed in an environment. Connection types, sensor types, or data rates of received information need not be synchronized or similar in nature as each sensor may act independently or in relation to other sensors. It should be appreciated that such connected infrastructure may provide a wide variety of data associated with a connected infrastructure. As one exemplary embodiment, one or more UPS devices may provide power quality data to the processing unit **130, 230.** This data may then be used to determine what conditions, if any exist.

Determining optimizations to connected UPS Devices **320** may be accomplished by analyzing EVD data **110a-110n**, connected infrastructure data **170a-170n**, or any combination thereof and determining what if any conditions are presently or may occur in the future to the connected infrastructure. Principles of the invention allow that determined conditions may be predictive, reactive, operational, financial, or any combination thereof. As one example, if an EVD data source **110a-110n** determines a particular geographic area where the connected infrastructure resides may be imminently subjected to severe weather, the Dynamic UPS Optimization Based on External Data system on receipt of the data **310**, may determine a risk or other condition exists to the connected infrastructure **320**, generate, modify, or access a profile to optimize the connected UPS device for the determined condition **330**, and change the operating mode of the connected infrastructure **340** to optimize a *present* condition.

Profiles used in generating, modifying, or accessing a profile to optimize the connected UPS device for the determined condition **330** may be pre-loaded into the processing unit **130**, **230**, created as part of the processing which occurs in the system **330**, acquired from a secondary network source, such as a cloud repository, which collects, processes, and generates profiles of various optimizations based on other EVD sources **110a-110n** or from other infrastructures. Each Dynamic UPS Optimization Based on External Data system may itself collect, process, and create profiles specific to the EVD sources **110a-110n** and infrastructure connected **170a - 170n.** Such optimization profiles may include optimization for safety in the event of a weather event, cyber risks which may create a danger for the power infrastructure, or financial risks to divert devices to less expensive power sources.

Alternate embodiments allow for predictive condition determinations. As an example, if an EVD data source **110a-110n** determines electricity usage data becomes very large on days where the temperature reaches above 90 degrees Fahrenheit resulting in temporary interruptions of available electricity ("brownouts") and the next (4) days may result in such a condition, a condition to the connected devices may be determined through the analysis such that the UPS Optimization Based on External Data system on receipt of the data **310**, may determine a condition exists to the connected infrastructure **320**, generate, modify, or access a profile to optimize the connected UPS device for the determined condition **330**, and change the operating mode of the connected infrastructure **340** to mitigate a *future* condition.

Alternate embodiments may include determining financial conditions to the operation of the connected infrastructure. In such cases, rate and availability of consumable power sources, such as electricity, fuel oil, Liquefied Natural Gas (LNG), among others, may be received **310** and a financial condition determined **320** that for a given period of time it may be financially optimal to operate the connected infrastructure equipment from an alternate external fuel source, such as LNG through a generator under the infrastructure control, then consume the higher priced electricity. In such a case, generate, modify, or access a profile to optimize the connected UPS device for the determined condition **330**, and the operating mode of electric transfer switches, connected to the UPS devices may be changed with the generator state, which is all part of the connected infrastructure **340** to prevent a determined condition. It should be appreciated many such embodiments may exist in various combinations based on the data sources and connected infrastructure.

In yet another embodiment, for either a financial or operational condition to the operation of the connected infrastructure, the source of electrical power may be changed from external to internal power or fuel sources. In such cases, on receipt of availability, condition, or other characteristic of consumable power source, such as electricity, fuel oil, LNG, UPS battery power, among others **310**, and a financial or operational optimization determined **320** or associated profile **330.** In such a case optimization may be to use all internal power sources such as generators or battery banks. As a result, the operating mode of electric transfer switches may be changed for the connected infrastructure **340** to configure for the particular optimization based on a profile **330.** As with above, it should be appreciated many such embodiments may exist in various combinations based on the data sources and connected infrastructure.

It should be appreciated determining optimizations to connected infrastructure devices may involve the analytical process of examining both the EVD data **110a-110n** connected infrastructure data **170a-170n**, or some combination. This analysis may determine both existing and unknown data correlations, as well as other useful information. This information created from the processing unit **130**, **230** of the method of the UPS Optimization Based on External Data may be used to make better decisions regarding operation of the connected infrastructure. As a result this information may be used to alert a user of such conditions who themselves may affect changes to the infrastructure or allow the system for UPS Optimization Based on External Data to change operating modes of the UPS and other connected infrastructure equipment autonomously **340.**

Once EVD **110a-110n** and connected infrastructure data **170a - 170n** are received **310** and optimizations to the connected infrastructure analyzed and determined **320**, a profile generated, modified, or accessed **330**, operating modes of the UPS and other connected infrastructure devices may be changed **340.** Embodiments of the invention allow for changes to the operational modes of the UPS and other connected infrastructure devices to optimize for the determined condition **320.** It should be appreciated that the analysis of EVD **110a-110n** and connected device data **170a - 170n** may produce conditions and optimizations that are financial as well as operational. In several exemplary embodiments the uses of electrical rate or demand response data to both determine risks to a connected infrastructure or to create a more efficient configuration of infrastructure are contemplated.

Principles of the invention allow for the connected devices to be placed by the system into an efficiency mode based on a determined condition. Various UPS and other connected infrastructure devices may have operation modes that allow for greater energy efficiency. Examples may be a "low power state" or similar operation that may seek to balance a basic operational state with efficient power consumption. This efficient state may be programmable in nature. One example known to the state of the art are Uninterruptable Power Supplies (UPS) which may be configured to continuously condition the electrical output to the critical computer systems to be protected. Such a UPS may possess both an Alternating Current (AC) to Direct Current (DC) converter connected to a DC/AC converter (often named an "inverter"). This process of "double conversion" completely decouples an electrical output from the electrical input to eliminate any disturbances which may be transmitted from input to output. Such designs may also include a bypass relay which bypasses the "double conversation" power stages, and as a result increases the efficiency of the UPS by removing the tare loss from the AC/DC and DC/AC converters (or inventers). This mode is often named "single conversion" or "bypass" mode. However, such configuration exposes the UPS output and any connected computer system equipment to any disturbances present on the UPS input, yet in such a "bypass" mode are highly energy efficient.

In various exemplary embodiments any connected devices may change operation to an efficiency mode in the absence of determined condition or risk to allow both efficient operation and energy savings. Specifically regarding a connected UPS, such devices may change operation from a "double conversion" to a "single conversion", or "bypass" mode in the absence of determined risk allowing energy efficiency to be gained without additional risk. If a risk is determined at any time **320** from the available received data **310**, the operating mode may be changed **340** to the more robust operating mode to allow mitigation of the risk determined based on a profile **330.**

Available operational modes of any UPS and other connected infrastructure devices are domain to the individual connected devices themselves and are known to the state of the art. Principles of the invention provide for changing the operating modes of connected devices **340** which exist previously in each connected UPS and other infrastructure devices.

Principles of the invention allow for a user to configure one or more data sources, risk thresholds, device parameters, operating characteristics, connected devices, or any combination thereof. Various embodiments exist where a user may configure their system to a particular risk profile, operational threshold, notification level, infrastructure environment, or any combination to suit the needs of the infrastructure and any responsible parties for same. Embodiments of configuration may allow configuration through various media including computer, hand held device, table device, Graphical User Interface (GUI), command line, touch screen, or any combination herein. It should be appreciated methods and types of interfaces are well known in the state of the art and should not be limited in any way.

Principles of the invention may also allow for the collection of any data associated with the Dynamic Uninterruptable Power Supply (UPS) Optimization Based on External Data system which may be used to create predetermined profiles. These predetermined profiles may be stored in the memory on the infrastructure event manager or other memory device, including but not limited to a central memory repository and made available to all, some, or a few users. Various embodiments may deploy these predetermined profiles automatically to users based on geography, connected infrastructure configuration, EVD data sources, risk profile, application usage, or any combination thereof. As one of many possible examples, a geographic profile may be pre-loaded into memory to take advantage of local context. For example, a particular geographic location may be prone to seismic activity that may lead to substantial electrical power loss. If the Dynamic Uninterruptable Power Supply (UPS) Optimization Based on External Data system is deployed in such a condition, a particular risk profile may be pre-loaded to provide mitigation from such events without intervention of the user, should they occur.

Various embodiments of the invention may generate profiles by data which may be collected from other Dynamic Uninterruptable Power Supply (UPS) Optimization Based on External Data systems, EVD data, connected Infrastructure Data, or any other data sources, including "Big Data" sources for the geographic location, thereby providing for the most accurate representation for these profiles. Principles of the invention allow these profiles to evolve over time based on the data available from other Dynamic Uninterruptable Power Supply (UPS) Optimization Based on External Data systems, or any other data sources detailed herein. Various embodiments also allow for correlation and creation of profiles not only on dependence with geography, but other dependencies as correlated within the data sets themselves. It should be appreciated these predetermined profiles are not limited to only the examples described herein and base themselves in the available data from any available source.

As another exemplary embodiment, to operate properly and efficiently, computer systems prefer a consistent temperature with particular characteristics. Excessive temperatures may cause damage to such equipment and may lead to catastrophic failure. Various embodiments of the present invention allow for Computer Room Air Conditioners (CRAC) connected infrastructure devices in the event of a determined risk **320** to change operation **330** to "pre-chill" a space such computer systems reside within if a UPS is supplying reserve electrical power. As the UPS may provide only a finite amount of electrical power, a condition may be determined **320**, and a profile accessed **330** to cool the protected space as quickly as possible. Knowledge of the UPS and CRAC data is relevant to determining a condition **320** and action appropriately on it **340.**

In additional exemplary embodiments, EVD Data sources **110a-110n** coupled with UPS and other infrastructure data **170a - 170n** may be used to determine what computer equipment load should be shed based on a present or future condition. Software agents installed on computer equipment protected by the infrastructure may be used in conjunction with EVD Data sources **110a-110n** coupled with UPS and other infrastructure data **170a - 170n** to determine what loads of any need be shed for a particular condition. As one of many examples, if a severe weather event is scheduled to take place as determined and a risk exists to the computer systems **320**, a profile **330** may exist or be user created to allow the UPS to change mode **340** to "double conversion mode" to protect against as many electrical disruptions as possible and also to shed all computer loads via the respective software agents except for the most critical. A user need not intervene in such a case as principles of the invention allow for such autonomous system actions.

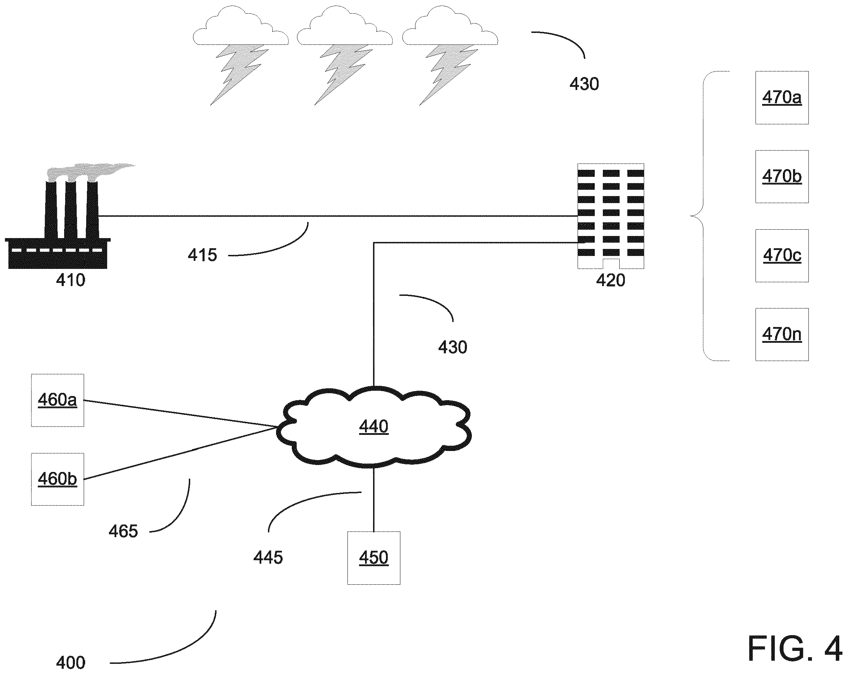

Several exemplary embodiments in context are illustrated in FIG. **4**, **400.** A building that contains computer systems to be protected **420** may have a UPS **470a,** and several connected devices such as a Generator **470b**, Automatic Transfer Switch (ATS) **470c**, or Computer Room Air Conditioner (CRAC) **470n.** Local power plant **410** produces electricity which is transmitted over a series of power lines **415** and other electrical infrastructure to deliver electrical power to the facility containing the computer systems **420.** Each connected infrastructure device **470a - 470n** maintains a data connection **430** to an external network **440** which also has one or more EVD data sources **460a**, **460b** connected to it via a network **465.** One EVD data source **460a** may be weather data from NOAA and a second for power grid availability data **460b** from the providing power plant **410.** If data is received from the EVD sources **460a**, **460b** or the Connected Infrastructure **470a - 470n**, the system processing unit **450** receives this data via a network connection **445** with the external network **440**, and on receipt of this data **310**, determines due to the weather disruption **430** a risk to the connected infrastructure exists **320**, a profile for such a condition may exist or be created **330**, the system processing unit **450**, may change the operating mode of the UPS and other connected infrastructure devices **340** based on the condition. In such a case the UPS **470a** may be placed into a "double conversion" mode to protect against electrical disruptions. A generator **470b** electrically connected to the UPS may be commanded to start and begin to provide power and when "clean" power is available, command the ATS device **470c** also connected to the UPS to switch from electrical grid to generator power. While this is occurring, the CRAC **470n** with reserve power supplied by the UPS may also be commanded to cool an additional 5 degrees Fahrenheit in anticipation of losing main electrical power completely and having only a short operational window if powered by the connected UPS.

Once the threat **430** has passed as determined by the system processing unit **450**, the process of receiving data **310** and determining the (now changed) condition **320** continues and the connected infrastructure equipment **470a - 470n**, is changed **340** to the pre-threat state based on a profile **330**. It should be appreciated such an embodiment FIG. **4**, **400** may take on any variety of configurations and should not be limited to the configuration illustrated in FIG. **4****.**

Any computer systems used in these various embodiments of the Infrastructure Event Manager may be, for example, general-purpose computers such as those based on Intel PENTIUM-type processor, Motorola PowerPC, Sun UltraSPARC, Hewlett-Packard PA-RISC processors, or any other type of processor.

For example, various embodiments of the invention may be implemented as specialized software executing in a general-purpose computer system **500** such as that shown in FIG. **5**. The computer system **500** may include a processor **520** connected to one or more memory devices **530**, such as a disk drive, memory, or other device for storing data. Memory **530** is typically used for storing programs and data during operation of the computer system **500.** The computer system **500** may also include a storage system **550** that provides additional storage capacity. Components of computer system **500** may be coupled by an interconnection mechanism **540**, which may include one or more busses (e.g., between components that are integrated within the same machine) and/or a network (e.g., between components that reside on separate discrete machines). The interconnection mechanism **540** enables communications (e.g., data, instructions) to be exchanged between system components of system **500.**

Computer system **500** also includes one or more input devices **510**, for example, a keyboard, mouse, trackball, microphone, touch screen, and one or more output devices **560**, for example, a printing device, display screen, speaker. In addition, computer system **500** may contain one or more interfaces (not shown) that connect computer system **500** to a communication network (in addition or as an alternative to the interconnection mechanism **540**).

The storage system **550**, shown in greater detail in FIG. **6**, typically includes a computer readable and writeable nonvolatile recording medium **610** in which signals are stored that define a program to be executed by the processor or information stored on or in the medium **610** to be processed by the program to perform one or more functions associated with embodiments described herein. The medium may, for example, be a disk or flash memory. Typically, in operation, the processor causes data to be read from the nonvolatile recording medium **610** into another memory **620** that allows for faster access to the information by the processor than does the medium **610.** This memory **620** is typically a volatile, random access memory such as a dynamic random access memory (DRAM) or static memory (SRAM). It may be located in storage system **550, 600**, as shown, or in memory system **530.** The processor **520** generally manipulates the data within the integrated circuit memory **530**, **620** and then copies the data to the medium **610** after processing is completed. A variety of mechanisms are known for managing data movement between the medium **610** and the integrated circuit memory element **530**, **620**, and the invention is not limited thereto. The invention is not limited to a particular memory system **530** or storage system **550.**

The computer system may include specially-programmed, special-purpose hardware, for example, an application-specific integrated circuit (ASIC). Aspects of the invention may be implemented in software, hardware or firmware, or any combination thereof. Further, such methods, acts, systems, system elements and components thereof may be implemented as part of the computer system described above or as an independent component.

Although computer system **500** is shown by way of example as one type of computer system upon which various aspects of the invention may be practiced, it should be appreciated that aspects of the invention are not limited to being implemented on the computer system as shown in FIG. 5. Various aspects of the invention may be practiced on one or more computers having a different architecture or components shown in FIG. 5. Further, where functions or processes of embodiments of the invention are described herein (or in the claims) as being performed on a processor or controller, such description is intended to include systems that use more than one processor or controller to perform the functions.

Computer system **500** may be a general-purpose computer system that is programmable using a high-level computer programming language. Computer system **500** may be also implemented using specially programmed, special purpose hardware. In computer system **500**, processor **520** is typically a commercially available processor such as the well-known Pentium class processor available from the Intel Corporation. Many other processors are available. Such a processor usually executes an operating system which may be, for example, the Windows 95, Windows 98, Windows NT, Windows 2000 (Windows ME) or Windows XP or Vista operating systems available from the Microsoft Corporation, MAC OS System X operating system available from Apple Computer, the Solaris operating system available from Sun Microsystems, or UNIX operating systems available from various sources. Many other operating systems may be used.

The processor and operating system together define a computer platform for which application programs in high-level programming languages are written. It should be understood that embodiments of the invention are not limited to a particular computer system platform, processor, operating system, or network. Also, it should be apparent to those skilled in the art that the present invention is not limited to a specific programming language or computer system. Further, it should be appreciated that other appropriate programming languages and other appropriate computer systems could also be used.

One or more portions of the computer system may be distributed across one or more computer systems coupled to a communications network. For example, as discussed above, a computer system that determines available power capacity may be located remotely from a system manager. These computer systems also may be general-purpose computer systems. For example, various aspects of the invention may be distributed among one or more computer systems configured to provide a service (e.g., servers) to one or more client computers, or to perform an overall task as part of a distributed system. For example, various aspects of the invention may be performed on a client-server or multi-tier system that includes components distributed among one or more server systems that perform various functions according to various embodiments of the invention. These components may be executable, intermediate (e.g., IL) or interpreted (e.g., Java) code which communicate over a communication network (e.g., the Internet) using a communication protocol (e.g., TCP/IP). For example, one or more database servers may be used to store device data, such as expected power draw, that is used in designing layouts associated with embodiments of the present invention.

It should be appreciated that the invention is not limited to executing on any particular system or group of systems. Also, it should be appreciated that the invention is not limited to any particular distributed architecture, network, or communication protocol.

Various embodiments of the present invention may be programmed using an object-oriented programming language, such as SmallTalk, Java, C++, Ada, or C# (C-Sharp). Other object-oriented programming languages may also be used. Alternatively, functional, scripting, and/or logical programming languages may be used. Various aspects of the invention may be implemented in a non-programmed environment (e.g., documents created in HTML, XML or other format that, when viewed in a window of a browser program render aspects of a graphical-user interface (GUI) or perform other functions). Various aspects of the invention may be implemented as programmed or non-programmed elements, or any combination thereof.

Embodiments of a systems and methods described above are generally described for use in relatively large data centers having numerous equipment racks; however, embodiments of the invention may also be used with smaller data centers and with facilities other than data centers. Some embodiments may also be a very small number of computers distributed geographically so as to not resemble a particular architecture.

In embodiments of the present invention discussed above, results of analyses are described as being provided in real-time. As understood by those skilled in the art, the use of the term real-time is not meant to suggest that the results are available immediately, but rather, are available quickly giving a designer the ability to try a number of different designs over a short period of time, such as a matter of minutes.

Having thus described several aspects of at least one embodiment of this invention, it is to be appreciated various alterations, modifications, and improvements will readily occur to any skilled in the art. Such alterations, modifications, and improvements are intended to be part of this disclosure, and are intended to be within the spirit and scope of the invention. Accordingly, the foregoing description and drawings are by way of example only.

## Claims

1. A System of Dynamic UPS Optimization Based on External Data, comprising:
a communications interface configured to communicate with an external network;
a memory capable of storing an External Variable Data (EVD) and an Uninterruptable Power Supply (UPS) Data; and
a processor in communication with the communications interface and the memory, the processor configured to:
receive the EVD and the UPS Data from the external network;
determine a condition affecting a UPS device using the EVD and the UPS Data received through the communications interface and stored in the memory;
generate a profile to optimize the UPS device for the condition determined and stored in the memory; and
change an operating mode of the UPS device based on the condition determined and the profile generated through the communications interface.

2. The System of Dynamic UPS Optimization Based on External Data of claim 1, wherein the processor is configured to optimize a plurality of UPS devices for the condition determined and stored in the memory.

3. The System of Dynamic UPS Optimization Based on External Data of claim 1, wherein the processor is configured to change the operation mode of the UPS device to an efficiency mode in response to the determined condition.

4. The System of Dynamic UPS Optimization Based on External Data of claim 1, wherein the processor is configured to change the operating mode of the UPS device from a double conversion mode to a single conversion mode, or to a bypass mode in response to the determined condition.

5. The System of Dynamic UPS Optimization Based on External Data of claim 1, wherein the processor is further configured to create a plurality of geographic profiles based on the EVD, the UPS Data, or any combination thereof.

6. The System of Dynamic UPS Optimization Based on External Data of claim 1, wherein the processor is configured to receive input from a user to configure one or more data sources, condition thresholds, device parameters, operating characteristics, UPS devices, or any combination thereof.

7. A method for Dynamic UPS Optimization Based on External Data, comprising:
receiving, at a processor, External Variable Data (EVD) and an Uninterruptable Power Supply (UPS) Data from an external network;
determining, at the processor, a condition to a UPS device from the EVD and UPSData received through a communications interface and stored in a memory;
generating, at the processor, a profile to optimize the UPS device for the condition determined; and
changing, by the processor, an operating mode of the UPS based on the condition determined and the profile generated through the communications interface.

8. The method for Dynamic UPS Optimization Based on External Data of claim 7, wherein generating the profile to optimize includes generating a profile for each of a plurality of UPS devices.

9. The method for Dynamic UPS Optimization Based on External Data of claim 7, wherein determining the condition to the UPS device from the EVD and the UPS Data received includes creating a plurality of geographic profiles.

10. The method for Dynamic UPS Optimization Based on External Data of claim 7, wherein changing an operation mode of the UPS device includes changing the operating mode to an efficiency mode.

11. The method for Dynamic UPS Optimization Based on External Data of claim 7, wherein changing an operation mode of the UPS device includes changing the operating mode from a double conversion mode to a single conversion mode, or to a bypass mode.

12. The method for Dynamic UPS Optimization Based on External Data of claim 7, further comprising configuring by a user one or more data sources, condition thresholds, network device parameters, operating characteristics, UPS devices, or any combination thereof.

13. A system for Dynamic Optimization of Network Devices, comprising:
a processing device configured to receive from an external network External Variable Data (EVD) and Uninterruptable Power Supply (UPS) Data and configured to process the EVD data and the UPS Data; and
a UPS device configured to receive the processed EVD and UPS Data and change an operating mode of the UPS device based on the processed EVD and UPS Data.
